# EUROPEAN PATENT APPLICATION

(11) **EP 3 705 607 A1**
(43) Date of publication of application: **09.09.2020**
(21) Application number: 19161674.7
(22) Date of filing: 08.03.2019
(51) Int. Cl.: C25D 9/02, C09D 5/00, C23F 11/14, C23F 11/16, C25D 13/12

(54) **COMPOSITION AND PROCESS FOR THE PROTECTION OF PRECIOUS METAL SUBSTRATES BY AN ORGANIC NANOLAYER**

(71) Applicant: COVENTYA S.p.A., 22060 Carugo (CO) (IT)
(72) Inventor: Nelias, Coline, 81100 Pistoia (IT); Bartoletti, Marianna, 51037 Montale (IT)
(74) Representative: Pfenning, Meinig & Partner mbB

(57) **Abstract**

The present invention refers to a composition for the protection of precious metal substrates as well as a process for obtaining an organic protective nanolayer on precious metal substrates. Moreover, the present invention refers to a precious metal substrate having an Organic Protective nanolayer.

## Description

The present invention refers to a composition for the protection of precious metal substrates as well as a process for obtaining an organic protective nanolayer on precious metal substrates. Moreover, the present invention refers to a precious metal substrate having an Organic Protective nanolayer.

The purpose of the invention is to protect precious metal surfaces against interactions with leather causing a transfer of its color or other additives. As regards products in the leather goods industry, a good resistance of metallic parts against interactions with leather is required to provide a final product with long life durability. These transfer problems have become an issue as a consequence of the introduction of nickel free sequences in metal plating which are less resistant to the contact with leather. Indeed, in the past, when nickel was still authorized as an under-layer, high thicknesses of nickel were used to prevent surface deterioration by providing a sufficient barrier against leather dyes becoming attached to the precious metal surfaces. Now that nickel use has been restricted due to its allergenic property, the resistance naturally decreased with the use of hypoallergenic galvanic sequences. It is the purpose of the present invention to raise the performances of leather interaction resistance of articles plated with hypoallergenic galvanic sequences.

The formation of protective organic layers, often as self-assembly monolayers (SAMs), on precious metal surfaces based on thiol compounds RSH is well documented and its application e. g. for protecting silver from tarnishing was developed in a broad range of detailed processes. Based on this experience, a variety of techniques have been introduced aiming generally at a modification of the properties of precious metal surfaces.

The affinity of thiols RSH for the coinage metals silver and gold (M) is based on the high polarizability of both the sulfur and the metal atoms which qualify as soft donors and acceptors (S→M) according to the concept of Hard and Soft Acids and Bases (HSAB). Upon the anchoring of the thiol on the metal surface, hydrogen is evolved. As an alternative, disulfides RSSR can be employed.

However, the application of the thiols has been limited by their low solubility in aqueous media. Thiols with long alkyl chains used e. g. for the deposition of hydrophobic surfaces have very low solubility (few milligrams per litre) in water and require the use of organic solvents with their drawbacks of cost for recycling or disposal, toxicity and flammability.

In this situation, industrial application of organic protective layers including SAMs calls for the development of new processes using specifically designed thiols which can be handled in an aqueous medium.

US 9,914,838 B2 discloses a composition containing a cationic polymer obtained from as a reaction product from nitrogen-containing heterocyclic compounds, epihalohydrines and a phosphorus compound. The composition can be used as a surface treatment for gold or gold alloys. The drawback of such a composition is that it only provides resistance to corrosion due to pinholes on the surface of the gold or gold alloy and does not offer protection against other corrosion mechanisms.

WO 2013/028309 A1 discloses an aqueous tarnish inhibiting solution comprising a mercapto carboxylic acid and a corrosion inhibitor to produce an antitarnish layer on metal surfaces, such as silver plated copper leadframes, and a method of using the same is provided. The drawbacks of such compositions is that it only provides silver and copper protection and that the use of carboxylic acid is mandatory.

WO 2005/021836 A2 discloses an aqueous, antitarnish and adhesion promoting treatment composition, comprising zinc ions along with metal ions selected from the group consisting of tungsten, molybdenum, cobalt, nickel, zirconium, titanium, manganese, vanadium, iron, tin, indium, silver, and combinations thereof; and optionally, an electrolyte that does not contain potassium or sodium ions; wherein the composition is substantially free of chromium, and where the treatment composition forms a coating on a substrate or material that enhances adhesion of a polymer to the material. WO 2005/021836 A2 also discloses materials coated with the above treatment composition, and methods of coating materials using the above composition. The drawback of such a composition is that its use is limited to copper.

US 2017/0002211 A1 discloses a composition containing a cationic polymer obtained from a reaction product of nitrogen-containing heterocyclic compounds, an epihalohydrin and a phosphorus compound. The composition can be used as a surface treatment for gold or gold alloy. The composition can seal pinholes on the surface of the gold or gold alloy. The drawback of such a composition is that it seals only pinholes.

WO 2009/067446 A1 discloses a method comprising depositing a metallic surface layer comprising a precious metal on a surface of a copper or copper alloy substrate by immersion displacement plating and exposing the electronic device to an aqueous composition comprising a first organic molecule comprising at least one functional group that interacts with and protects precious metal surfaces and a second organic molecule comprising at least one functional group that interacts with and protects copper surfaces. This method does not prevent color transfer from leather.

None of those prior art documents teaches a passivation technique that combines anticorrosion protection with protection against the transfer of color or other additives resulting from the contact between precious metal and leather.

When starting from this prior art it was therefore the objective of the present invention to provide precious metal substrates which are protected against corrosion as well as against the color transfer from leather elements being in contact with the precious metal substrate.

This problem is solved by the composition for the protection of precious metal substrates with the features of claim 1 and the process for obtaining an organic protective nanolayer on precious metal substrates with the features of claim 10. Moreover, a precious metal substrate having a self-assembly monolayer as protective layer is provided as well. The further dependent claims describe preferred embodiments.

This objective is reached by an organic protective nanolayer applied on top of a precious metal finishing to prevent the transfer of organic dyes and other additives from the leather to the metallic surface.

According to the present invention, the composition for the protection of precious metal substrates against the transfer of color and other additives from leather is provided, wherein the composition is an aqueous solution comprising
a) at least one compound of the general formula I: 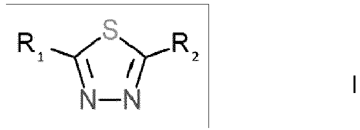 with
   R₁ or R₂ independently selected from the group consisting of
   - thiol,
   - hydrogen,
   - alkyl, hydroxyalkyl, alkoxy and alkoxyalkyl, alkylthio and alkylthioalkyl wherein each of them are C₁-C₁₂ and linear or branched,
   - aralkyl, allyl, or acetyl wherein each of them are unsubstituted or substituted,
   - nitrogen-functional groups selected from the group consisting of amino, mono- and dialkylamino, aminoalkyl, monoalkylaminoalkyl, dialkylaminoalkyl and the corresponding ammonium functions at linear or branched alkyl groups wherein each of them are C₁-C₁₂, and
   - combinations thereof and
b) at least one buffering agent.

In another preferred embodiment, the composition also has a protective anti tarnish effect for precious metal substrates.

The nanolayer is generated selectively on the precious metal surfaces of wafers owing to the high affinity of the thiolate function for late transition elements. The aqueous medium is buffered to secure long-term stability of the solutions of the thiol agent and to regulate the growth of the nanolayers.

According to the present invention an organic protective nanolayer is applied on top of a precious metal finishing to prevent transfer of organic dyes from the leather to the metallic surface. This is achieved by slightly changing the polarity of the positively charged metallic surface to create an additional barrier against interactions with leather. The organic protective nanolayer is deposited on the precious metal surface and this nanolayer is produced using a solution that contains a five-membered heterocycles bearing at least one thiol or thiolate function and a buffering agent. For optimum performance, 1,3,4-thiadiazoles have been introduced which bear (a) thiol/thiolate group(s) in the 2 and/or 5 positions of the heterocycle. These thiol function are the anchoring groups for the metal surface. Where only one thiol/thiolate group is present (as R₁), the remaining position (R₂) may be occupied by a choice of functional groups to regulate the solubility in the aqueous medium and the deposition process.

It is preferred that R₁ and R₂ are independently from each other selected from the group consisting of
- thiol,
- hydrogen,
- linear and branched alkyl, alkoxy wherein each of them are independently from each other one of C₁-C₃,
- primary and secondary amino wherein each of them are independently from each other one of C₁-C₅,
- linear or branched alkylthio wherein each of them are independently from each other one of C₁-C₈, and
- combinations thereof.

More preferably, R₁ and R₂ are independently from each other selected from the group consisting of
- thiol,
- hydrogen,
- alkoxy wherein each of them are independently from each other one of C₁-C₃,
- primary and secondary amino wherein each of them are independently from each other one of C₁-C₃,
- linear or branched alkylthio wherein each of them are independently from each other one of C₁-C₆, and
- combinations thereof.

In a preferred embodiment, the compound is of the general formula II 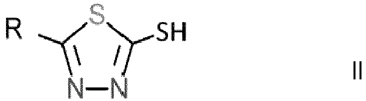 with
R selected from the group consisting of
- thiol,
- hydrogen,
- alkyl, hydroxyalkyl, alkoxy and alkoxyalkyl, alkylthio and alkylthioalkyl wherein each of them are C₁-C₁₂ and linear or branched,
- aralkyl, allyl, or acetyl wherein each of them are unsubstituted or substituted,
- nitrogen-functional groups selected from the group consisting of amino, mono- and dialkylamino, aminoalkyl, monoalkylaminoalkyl, dialkylaminoalkyl and the corresponding ammonium functions at linear or branched alkyl groups wherein each of them are C₁-C₁₂, and
- combinations thereof.

The compound is preferably selected from the group consisting of 5-methylthio-1,3,4-thiadiazole-2-thiol with R₁ = CH₃S and R₂ = SH, 5-amino-1,3,4-thiadiazole-2-thiol with R₁ = NH₂ and R₂ = SH, 5-methyl-1,3,4-thiadiazole-2-thiol with R₁ = CH₃, R₂ = SH, 2-amino-5-methyl-1,3,4-thiadiazole with R₁ = CH3, R₂ = NH2, 1,3,4-thiadiazole-2,5-dithiol with R₁ = R₂ = SH, and their sodium, potassium and ammonium salts.

In a further preferred embodiment,
the compounds of formula I or II are at least partially present in their oxidatively coupled form (Formula III), i. e. as a disulfides, preferably as the disodium bis(1,3,4-thiadiazol-2-yl)disulfide-5,5'-dithiolate (Formula III, R = SNa).

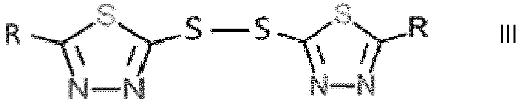

Preferably, the concentration of the compound of general formula I or II in the composition is from 5 to 500 mmol/L, more preferably from 10 to 250 mmol/L and most preferably from 15 to 100 mmol/L.

It is preferred that the buffering agent is selected from the group consisting of citric acid and its salts, phosphoric acid and its salts, boric acid and its salts, mono-, di- and tri-carboxylic acids and their salts, preferably selected from the group consisting of formic acid and its salts, acetic acid and its salts, and Rochelle salt, and combinations thereof, wherein the concentration of the buffering agent in the composition is preferably from 1 to 100 g/L, more preferably from 5 to 70 g/L, and most preferably from 10 to 50 g/L.

The composition has preferably a pH from 2 to 10, more preferably from 4 to 8, most preferably from 5 to 7.

It is preferred that the aqueous solution comprises only water a solvent. However, it is also possible that the solution comprises additional solvents, e g. alcohols.

According to the present invention also a process for obtaining an organic protective nanolayer on precious metal substrates is provided wherein the substrate is exposed to the composition as described above.

Preferably, the substrate is exposed to the composition by immersion. In this regard, it is preferred that the substrate is exposed to the composition for at least 5 minutes, preferably 10 to 30 min, more preferably 15 to 20 min.

In another preferred embodiment of the inventive process, the substrate is exposed to the composition under cathodic and/or anodic polarization, preferably with pulsed current.

In another preferred embodiment, after exposing a substrate to the composition, the substrate is exposed to water for cleaning, preferably by immersion.

It is preferred that the precious metal substrate comprises or consists of a precious metal selected from the group consisting of gold, palladium, silver, platinum, rhodium, ruthenium and alloys thereof with each other and other alloy formers, preferably selected from the group consisting of gold, palladium, ruthenium and alloys combinations thereof.

Moreover, a precious metal substrate having an organic protective nanolayer as protective layer is provided wherein the protective layer is obtainable with a process as described above.

With reference to the following figures and examples, the subject-matter according to the present invention is intended to be explained in more detail without wishing to restrict said subject-matter to the specific embodiments shown here.
Fig. 1 shows the Raman spectrum of molecule 1 in solution
Fig. 2 shows the Raman spectrum of molecule 2 in solution
Fig. 3 shows STM image obtained after modification by molecule 1 and rinsing with water
Fig. 4 shows the STM-TERS spectrum obtained on a flat gold surface, previously immerged into Molecule 1 solution
Fig. 5 shows the STM-TERS spectrum obtained on a cluster present on Gold surface, previously immerged into Molecule 1 solution
Fig. 6 shows the TERS spectrum on flat gold surface treated with Molecule 2 solution
Fig. 7 shows Sample 1 AFM scanning after DI water rinsing for 30 minutes
Fig. 8 shows Sample 2 AFM scanning after DI water rinsing for 30 minutes
Fig. 9 shows a magnification of 20X from Fig. 8 on filaments observed on Sample 2 AFM scanning after DI water rinsing for 30 minutes

### Examples

In order to illustrate the formation of the organic protective nanolayer on precious metal surfaces from the solutions of substituted 1,3,4-thiadiazole heterocycles introduced in the above description of the invention, Tip Enhanced Raman Spectroscopy analyses (TERS) were performed as well as Scanning Tunneling Microscopy (STM) studies to monitor the quality and morphology of the SAMs developed in the process. In addition, Atomic Force Imaging (AFM) was also applied.

### 1) Sample preparation

As substrates a set of wafers with 100 nm of Au deposited by thermal evaporation under vacuum on cleaved mica was used.

The starting solutions were prepared by adding 100 µL of the solution containing the thiadazole compound and a conductive salt / buffer in 4.9 mL of H₂O. The final concentration of the active compound amounted to 50 mM (except for compound 1 and 2) and the mixture was heated to homogenize.

For the passivation, brass panels (5.0 X 3.5 cm x 0.3 cm thickness) from Ossian have been used on which different layers given below have been plated.

### White bronze

Also white bronze is a commercial product from Coventya, named Auralloy 450 LF, it is a Cu-Sn-Zn, lead-free alloy plated from a cyanide based plating solution. The composition of the ternary alloy is in the following range (wt.-%):
Cu: 51-55%
Sn: 28-31%
Zn: 14-19%.

The solution is composed of the following commercial products:
AURALLOY 450 LF PAE
AURALLOY 450 LF BRIGHTENER: 3 to5 mL/L
AURALLOY 450 LF SURFACT: 1,5 to 3 mL/L

### Yellow bronze

Also yellow bronze is a commercial product from Coventya, named Auralloy 270 LF or Auralloy 250 LF, it is a Cu-Sn-Zn, lead-free alloy plated from a cyanide based plating solution. The composition of the ternary alloy is in the following range (wt.-%):
Cu: 70-80%
Sn: 15-23%
Zn: 3-10%.

### Gold

The gold underlayer has been prepared from a generic acidic gold bath. The Coventya reference for this acidic Gold underlayer is PARADOR 9812 NF.

The gold substrates were flame-cured and then soaked for 15 minutes in the solutions. A first rinse with water was then performed, and subsequently the samples were left for a minimum of 30 minutes in pure water.

The different conditions used with the samples have been listed in Table 1 below.

**Table 1**

| **Molecule Code** | **Compound Name** | **Conditions of preparation** | **pH** | **media** |
|---|---|---|---|---|
| 1 | Disodium-2,5-dimercapto-1,3,4-thiodiazole (NATD) | 15 minutes 45°C | 8 | water |
| 2 | 2-Amino-5-mercapto-1,3,4-thiadiazole | 15 minutes 45°C | 10 | water |
| 3 | Disodium-2,5-dimercapto-1,3,4-thiodiazole (NATD) | 15 minutes 45°C | 5,4 | water + citric/citrate as buffer media |

### 2) Sample characterization

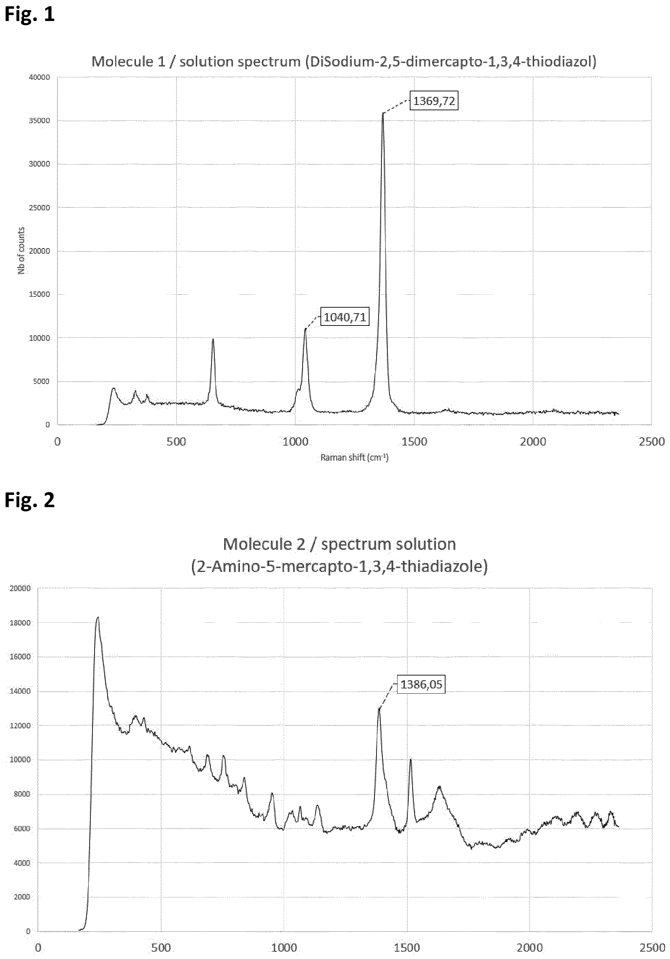

To obtain the spectrum of the molecule, a specific wavelength to collect the response of the molecule in frequency, specific answer of the molecule that depend of the bounding forces between the atoms inside the molecule were applied.
For the molecule 1 as presented in Fig.1, mainly three specific peaks were obtained, corresponding to vibrations of the N=N and S-C bonds, including the strong response at 1400 cm⁻¹, characteristic of the thiadiazole heterocycle.

For the molecule 2 as presented in Fig.2, these responses are also present, even though less pronounced than the first example.

### Example 1

### MOLECULE 1

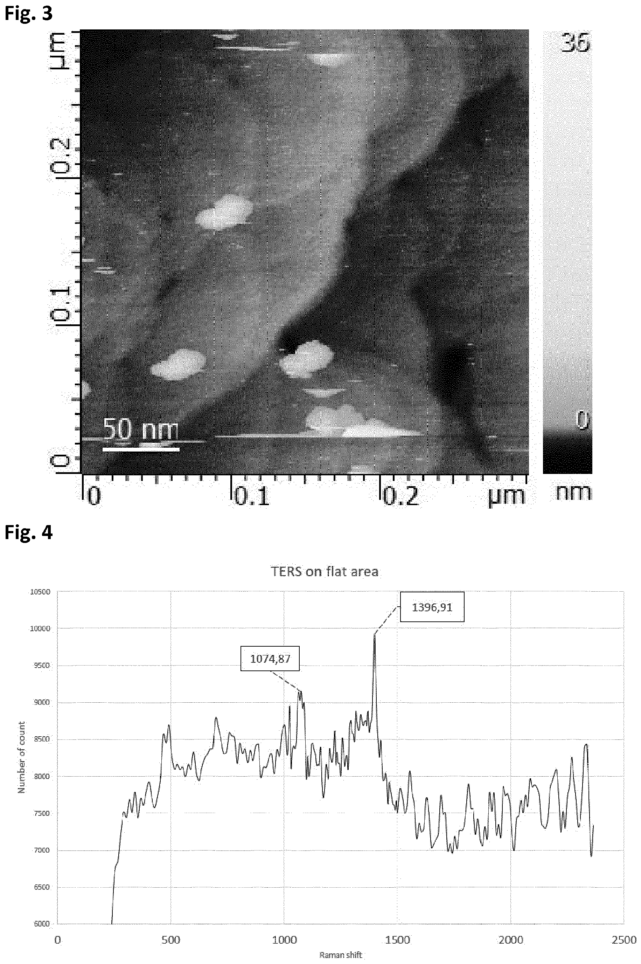

As first step, a STM (Scanning Tunneling Microscopy) image of the protected gold surface was obtained in order to screen the obtained nanolayer and find a surface area that can further be characterized. Fig. 3 shows a characteristic image obtained on a 300x300 nm² surface (sample 1). We can observe on Fig 3. that on the surface, we obtain white nanoparticles that will be named as cluster in the description below. These clusters are probably small oligomers formed in solution and deposited on the substrates during the formation of the nanolayer. Notable, these clusters are still present after water rinsing which demonstrate strong bounding between the nano-layer and Gold atoms. Thanks to the TERS analysis, it is possible to identify the cluster composition as well as the presence of the nanolayers on homogeneous parts of the surface (named as homogeneous surface).

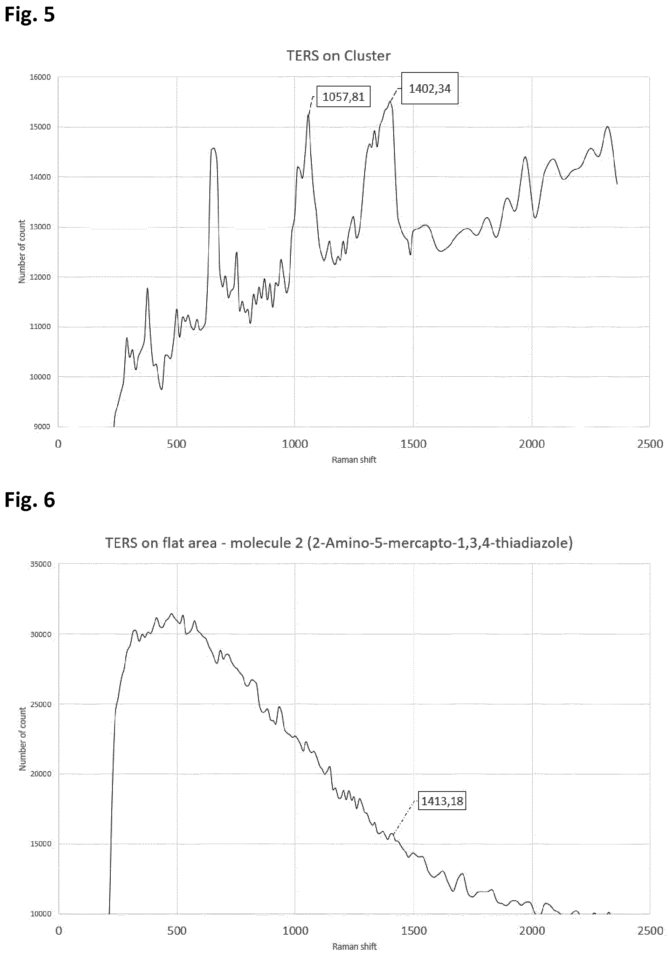

TERS spectra were obtained either of the clusters or of a homogeneous zone in order to highlight the presence of the organic nano-layer on both areas For this purpose an STM scanning image was conducted, which was stopped when a cluster was identified. Spectra of 20s were then recorded on the cluster and its environment, which turned out to present similar response with different intensities (see Fig. 4 and Fig. 5).

The TERS analysis performed on clusters bonded to the surface but also on the flat surface confirmed the presence of the five-membered heterocyclic compound. Indeed, the peaks previously identified as characteristic in solution (Fig 1.) are again found in the analysis of the gold surface that has been treated with the solution of the five-membered heterocyclic compound. The significant lines are found out around 1075 cm⁻¹ and 1400 cm⁻¹. This results highlight the homogeneous presence of the 2,5-dimercapto-1,3,4-thiodiazole all over the surface with an heterogenous distribution considering the formation of oligomers in solution. Nevertheless, the spectrum on the flat surface present the two significant peaks defined in figure 1, response of 2,5-dimercapto-1,3,4-thiodiazole in solution, which confirm the presence of the molecule on the flat surface.

### Example 2

### MOLECULE 2

Similar investigations were carried out in order to confirm the presence of the 5-amino-2mercapto-1,3,4-thiadiazole on the gold surface.

Operating condition to deposit the nanolayers:
- Substrate wafers produced with 100 nm of Au deposited by thermal evaporation under vacuum on cleaved mica
- [5-amino-2-mercapto-1,3,4-thiadiazole] = 50 mM in water
- pH = 10
- Temperature = 40°C
- Time of immersion 15 minutes
- Rinsing with demineralized water (30 minutes)

The STM-TERS analysis (Fig. 6) performed on the gold surface previously immerged into the molecule 2 solution shows a slight response at 1413 cm⁻¹, characteristic of the presence of a thiadiazole compound. Even though the background of the spectrum is more crowded as compared to the previous analysis, the signal is significant because the results could be well reproduced.

### Example 3

### MOLECULE 1 deposited in citrate / citric media

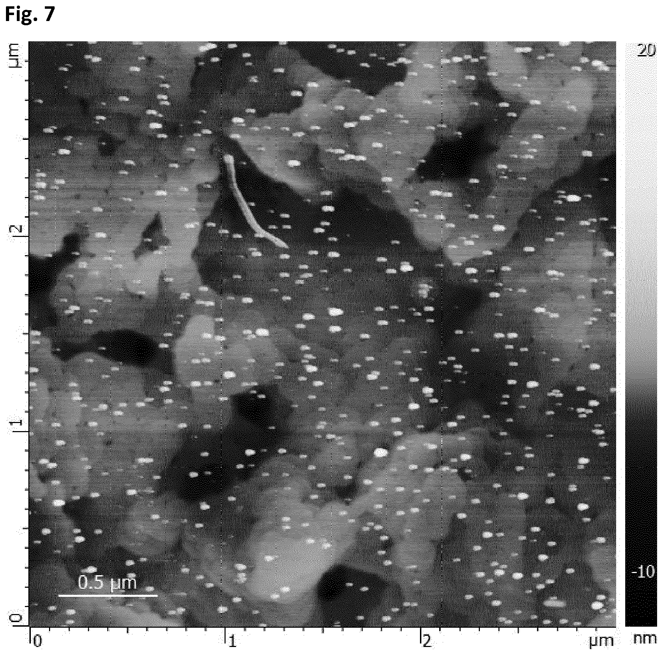

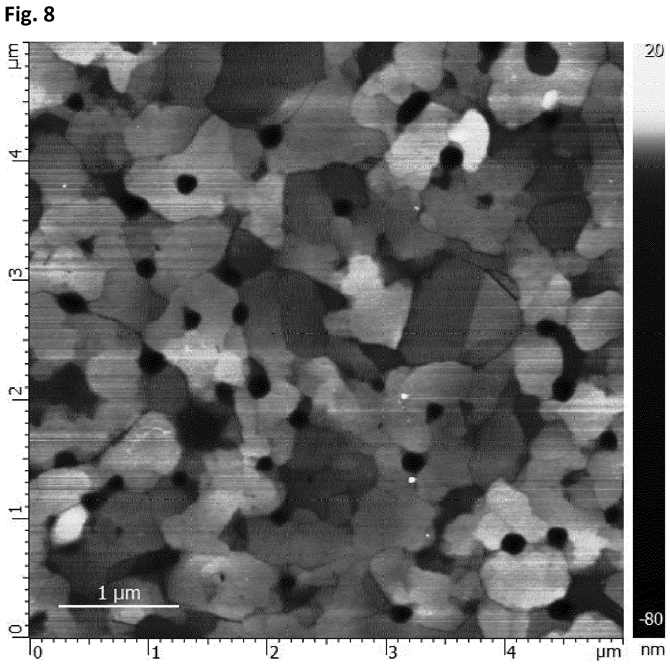

The benefit of the introduction of the conductive salt, has been confirmed by AFM and TERS analysis. Two samples were analysed:
Operating condition to obtain the nanolayer for Sample 1 (Fig. 7):
   - Substrate wafers produced with 100 nm of Au deposited by thermal evaporation under vacuum on cleaved mica
   - [Disodium-2,5-dimercapto-1,3,4-thiodiazole] = 50 mM in water
   - pH = 5
   - Temperature = 40°C
   - Time of immersion 15 minutes
   - Rinsing with demineralized water (30 minutes)
Operating condition to obtain the nanolayer for Sample 2 (Fig. 8):
   - Substrate wafers produced with 100 nm of Au deposited by thermal evaporation under vacuum on cleaved mica
   - [Disodium-2,5-dimercapto-1,3,4-thiodiazole] = 50 mM in water
   - [Potassium citrate] = 25 g/L
   - [Citric acid] = 7 g/L
   - pH = 5
   - Temperature = 40°C
   - Time of immersion 15 minutes
   - Rinsing with demineralized water (30 minutes)

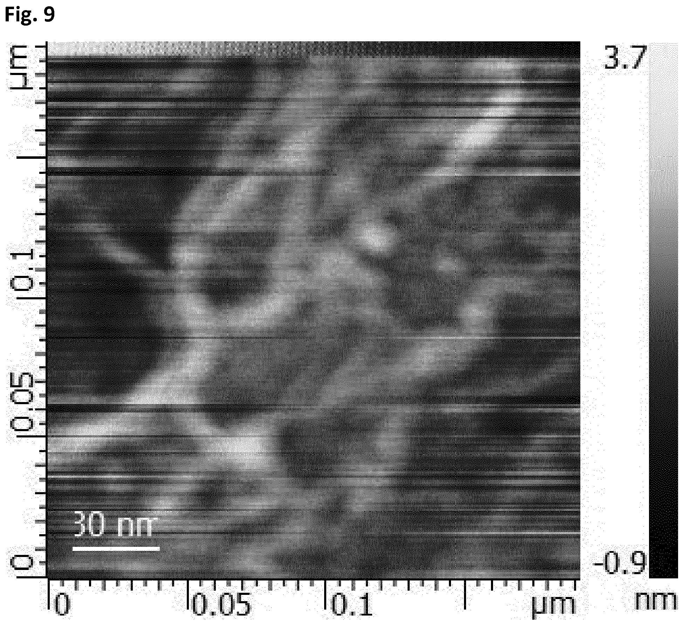

A comparison of Fig. 7 and Fig. 8 shows that clusters are not present anymore or considerably reduced with the introduction of the conductive salt. The TERS analysis confirms that the heterocyclic compound is firmly bonded to the surface.
The image with increased magnification is shown in Fig. 9.

The nanolayer clearly forms a different structure in the presence of the buffer / conductive salt (such as filament) whereas without this component, the configuration of the SAM was in the form of clusters (white spots on Fig. 7.).

### 3) Corrosion test

In order to demonstrate the improvements obtained thanks to the application of the innovative organic protective nanolayer as compared to the prior art (octadecanethiol or 1-hexadecanethiol), in the examples below it has been shown that a nickel free plating sequence can now be positively protected with an organic nanomayer against the interaction with leather..

Substrate used for the passivation application:
- Brass copper plated (> 15 µm)
- White bronze > 2 µm
- Yellow bronze > 3 µm
- Gold 0.5 µm

The reference test is following the standard conditions (ISO 4611 - 96 hours), introducing the leather below the metallic surface, in the media described below:
- 3 minutes of TURBULA® before the test
- Black soft leather
- temperature 55°C
- humidity 95%

**Table 2**

| **Sample Code** | **Compound Name** | **Conditions of preparation** | **pH** | **media** |
|---|---|---|---|---|
| 1 | 2-amino-5-ethylthio-1,3,4-thiadiazole (AETD) | 30 minutes RT (20°C) | ethanol media | ethanol 10% |
| 2 | 2-amino-5-ethyl-1,3,4-thiazole (AETDA) | 30 minutes RT (20°C) | ethanol media | ethanol 10% |
| 3 | 3-Amino-5-methylthio-1,2,4-triazole (AMTT) | 15 minutes 45°C | 8 | water |
| 4 | Disodium-2,5-dimercapto-1,3,4-thiodiazole (NATD) | 15 minutes 45°C | 8 | water |
| 5 | 5-methylthio-1,3,4-thiadiazole-2-thiol | 10 minutes 45°C 5V | 5,4 | water + citric/citrate as buffer media |
| 6 | 5-methylthio-1,3,4-thiadiazole-2-thiol | 5 minutes 45°C | 5,4 | water + citric/citrate as buffer media |
| 7 | Disodium-2,5-dimercapto-1,3,4-thiodiazole (NATD) | 5 minutes 45°C 5V | 5,4 | water + citric/citrate as buffer media |
| 8 | Disodium-2,5-dimercapto-1,3,4-thiodiazole (NATD) | 15 minutes 45°C | 5,4 | water + citric/citrate as buffer media |

Octadecanethiol and 1-Hexadecanethiol were used as references for those tests as they are compounds from the prior art (WO2009067446A1). Octadecanethiol was applied for 10 minutes without and with cathodic polarization for 1 minute at 7 V; 1-Hexadecanthiol was applied for 30 minutes. The results of the test obtained with the compounds of the prior arts and the different heterocyclic compounds are shown in Tables 3 and 4 below.

**Table 3**

| **Sample Code** | **Compound Name** | **Result** | **Surface analysis** |
|---|---|---|---|
| Prior arts | octadecanethiol/ 1-hexadecanethiol | strong color transfer | 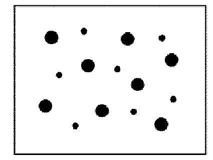 |
| Ref no passivation | no protective layer | intense color transfer | 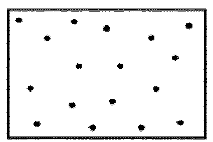 |
| 1 | 2-amino-5-ethylthio-1,3,4-thiadiazole (AETD) | mild color transfer | 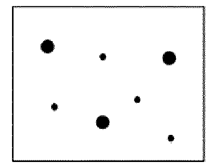 |
| 2 | 2-amino-5-ethyl-1,3,4-thiazole (AETDA) | mild color transfer | 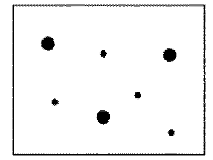 |
| 3 | 3-amino-5-methylthio-1H-1,2,4-triazole (AMTT) | mild color transfer | 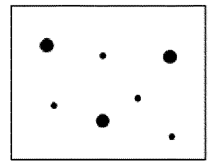 |
| 4 | disodium-2,5-dimercapto-1,3,4-thiodiazole (NATD) | low color transfer | 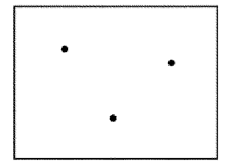 |

**Table 4**

| **Sample Code** | **Compoud Name** | **Result** | **Surface analysis** |
|---|---|---|---|
| 5 | 5-methylthio-1,3,4-thiadiazole-2-thiol | no color transfer | 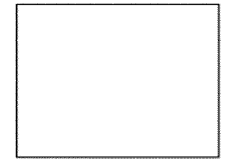 |
| 6 | 5-methylthio-1,3,4-thiadiazole-2-thiol | no color transfer | 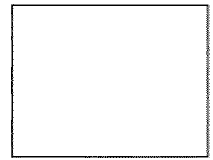 |
| 7 | disodium-2,5-dimercapto-1,3,4-thiodiazole (NATD) | no color transfer | 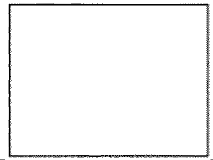 |
| 8 | disodium-2,5-dimercapto-1,3,4-thiodiazole (NATD) | no color transfer | 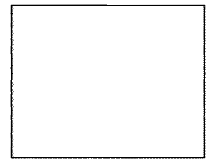 |

Optimized operating conditions to reproduce the performance on different finishings other than gold and gold alloys have been established in order to show the absence of color transfer also for these metals thanks to the application of the organic nanolayers.

Substrates used for the passivation application:
- Brass copper plated (> 15 µm)
- White bronze > 4 µm
- Finishing

The results of the test are shown in Tables 5 and 6 below.

**Table 5**

| **Sample Code** | **Finishing** | **Compound Name** | **Result** | **Surface analysis** |
|---|---|---|---|---|
| prior art reference | palladium alloy (1 µm) | octadecanethiol/ 1-hexadecanethiol | strong color transfer | 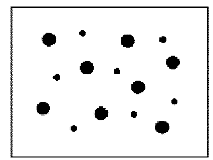 |
| reference without passivation | palladium alloy (1 µm) | no protective layer | intense color transfer | 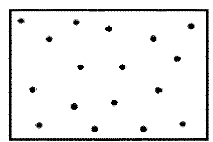 |
| 7 | palladium alloy (1 µm) | disodium-2,5-dimercapto-1,3,4-thiodiazole (NATD) | no color transfer | 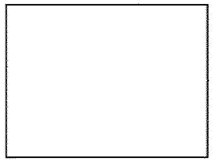 |
| prior art reference | silver (5 µm) | octadecanethiol/ 1-hexadecanethiol | strong color transfer | 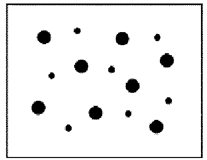 |
| reference without passivation | silver (5 µm) | no protective layer | medium color transfer | 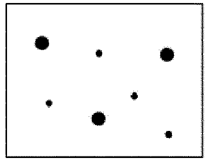 |
| 7 | silver (5 microns) | Disodium-2,5-dimercapto-1,3,4-thiodiazole (NATD) | no color transfer | 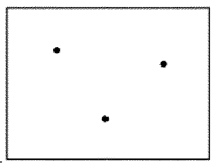 |

**Table 6**

| **Sample Code** | **Finishing** | **Compound Name** | **Result** | **Surface analysis** |
|---|---|---|---|---|
| prior art reference | Ruthenium (0,2 microns) | octadecanethiol / 1-hexadecanethiol | strong color transfer | 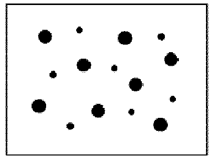 |
| reference without passivation | Ruthenium (0,2 microns) | no protective layer | medium color transfer | 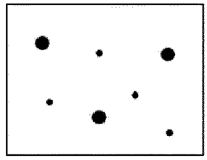 |
| 7 | Ruthenium (0,2 microns) | disodium-2,5-dimercapto-1,3,4-thiodiazole (NATD) | no color transfer | 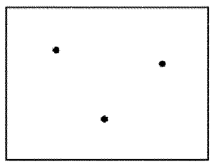 |

## Claims

1. A composition for the protection of precious metal substrates against the transfer of color and other additives from leather, wherein the composition is an aqueous solution comprising
a) at least one compound of the general formula I 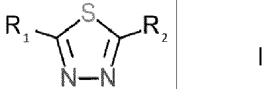 with
R₁ or R₂ independently selected from the group consisting of
• thiol,
• hydrogen,
• alkyl, hydroxyalkyl, alkoxy and alkoxyalkyl, alkylthio and alkylthioalkyl wherein each of them are C₁-C₁₂ and linear or branched,
• aralkyl, allyl, or acetyl wherein each of them are unsubstituted or substituted,
• nitrogen-functional groups selected from the group consisting of amino, mono- and dialkylamino, aminoalkyl, monoalkylaminoalkyl, dialkylaminoalkyl and the corresponding ammonium functions at linear or branched alkyl groups wherein each of them are C₁-C₁₂, and
• combinations thereof and
b) at least one buffering agent.

2. Composition of claim 1,
**characterized in that** R₁ and R₂ are independently from each other selected from the group consisting of
• thiol,
• hydrogen,
• linear and branched alkyl, alkoxy wherein each of them are independently from each other one of C₁-C₃,
• primary and secondary amino wherein each of them are independently from each other one of C₁-C₅,
• linear or branched alkylthio wherein each of them are independently from each other one of C₁-C₈, and
• combinations thereof,
preferably selected from the group consisting of
• thiol,
• hydrogen
• alkoxy wherein each of them are independently from each other one of C₁-C₃,
• primary and secondary amino wherein each of them are independently from each other one of C₁-C₃,
• linear or branched alkylthio wherein each of them are independently from each other one of C₁-C₆, and
• combinations thereof.

3. Composition to any one of claims 1 or 2,
**characterized in that** the compound is of the general formula II: 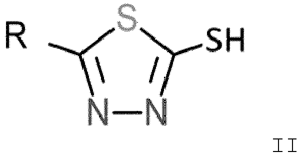 with
R selected from the group consisting of
• thiol,
• hydrogen,
• alkyl, hydroxyalkyl, alkoxy and alkoxyalkyl, alkylthio and alkylthioalkyl wherein each of them are C₁-C₁₂ and linear or branched,
• aralkyl, allyl, or acetyl wherein each of them are unsubstituted or substituted,
• nitrogen-functional groups selected from the group consisting of amino, mono- and dialkylamino, aminoalkyl, monoalkylaminoalkyl, dialkylaminoalkyl and the corresponding ammonium functions at linear or branched alkyl groups wherein each of them are C₁-C₁₂, and
• combinations thereof.

4. Composition to any one of claims 1 to 3,
**characterized in that** the compound is selected from the group consisting of
• 5-methylthio-1,3,4-thiadiazole-2-thiol with R₁ = CH₃S and R₂ = SH,
• 5-amino-1,3,4-thiadiazole-2-thiol with R₁ = NH₂ and R₂ = SH,
• 5-methyl-1,3,4-thiadiazole-2-thiol with R₁ = CH₃, R₂ = SH,
• 2-amino-5-methyl-1,3,4-thiadiazole with R₁ = CH₃, R₂ = NH₂,
• 1,3,4-thiadiazole-2,5-dithiol with R₁ = R₂ = SH, and
• their sodium, potassium and ammonium salts.

5. Composition to any one of claims 1 to 4,
**characterized in that** the compounds of formula I or II are at least partially present in their oxidatively coupled form (Formula III), i. e. as a disulfides, preferably as the disodium bis(1,3,4-thiadiazol-2-yl)disulfide-5,5'-dithiolate (Formula III, R = SNa) .

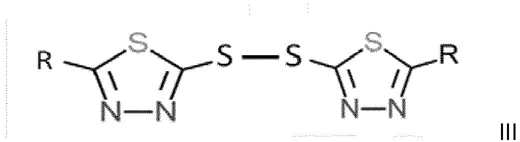

6. Composition to any one of claims 1 to 5,
**characterized in that** the concentration of the compound of general Formula I, Formula II or Formula III is comprised of between 5 to 500 mmol/L, preferably between 10 to 250 mmol/L, more preferably between 15 to 100 mmol/L.

7. Composition to any one of claims 1 to 6,
**characterized in that** the buffering agent is selected from the group consisting of
• citric acid and its salts,
• phosphoric acid and its salts,
• boric acid and its salts,
• mono-, di- and tri-carboxylic acids and their salts, preferably selected from the group consisting of formic acid and its salts, acetic acid and its salts, and Rochelle salt, and
• combinations thereof,
wherein the concentration of the buffering agent in the composition is preferably from 1 to 100 g/L, more preferably from 5 to 70 g/L, and most preferably from 10 to 50 g/L.

8. Composition to any one of claims 1 to 7,
**characterized in that** the composition has a pH from 2 to 10, preferably from 4 to 8, more preferably from 5 to 7.

9. Composition to any one of claims 1 to 8,
**characterized in that** the only solvent in the composition is water.

10. A process for obtaining an organic protective nanolayer on a precious metal substrates wherein the substrate is exposed to the composition of any of claims 1 to 9.

11. Process of claim10,
**characterized in that** the substrate is exposed to the composition by immersion, preferably for at least 5 min, more preferably 10 to 30 min, most preferably 15 to 20 min.

12. Process of any of claims 10 or 11,
**characterized in that** the substrate is exposed to the composition under cathodic and/or anodic polarization, preferably as pulsed current.

13. Process of any of claims 10 to 12,
**characterized in that** after exposing the substrate to the composition the substrate is exposed to water for cleaning, preferably by immersion.

14. Process of any of claims 10 to 13,
**characterized in that** the precious metal substrate comprises or consists of a precious metal selected from the group consisting of gold, palladium, silver, platinum, rhodium, ruthenium and alloys thereof with each other and other alloy formers, preferably selected from the group consisting of gold, palladium, ruthenium and alloys combinations thereof.

15. Precious metal substrate having an organic protective nanolayer as protective layer obtainable with the process of any of the claims 10 to 14.
